# EUROPEAN PATENT APPLICATION

(11) **EP 1 811 518 A1**
(43) Date of publication of application: **25.07.2007**
(21) Application number: 05805453.7
(22) Date of filing: 31.10.2005
(51) Int. Cl.: G11B 17/26, G11B 17/30

(54) **OPTICAL DISK DEVICE**

(30) Priority: 12.11.2004 JP 2004329099
(71) Applicant: MATSUSHITA ELECTRIC INDUSTRIAL CO., LTD, Kadoma-shi, Osaka 571-8501 (JP)
(72) Inventor: HASEGAWA, Kazunori c/o Matsushita Elec.Ind., Chuo-ku, Osaka-shi, Osaka 540-6319 (JP); NAKAYAMA, Tsukasa c/o Matsushita Elec.Ind., Chuo-ku, Osaka-shi, Osaka 540-6319 (JP); NISHIDA, Hiroto Matsushita Elec.Ind., Chuo-ku, Osaka-shi, Osaka 540-6319 (JP); NAKADE, Isamu c/o Matsushita Elec. Ind., Chuo-ku, Osaka-shi, Osaka 540-6319 (JP)
(74) Representative: Pautex Schneider, Nicole Véronique
(86) International application number: PCT/JP2005/020008
(87) International publication number: WO 2006/051710

(57) **Abstract**

An optical disk device capable of positioning easily a rotating arm with respect to a tray is provided. A tray 20 in which a desired optical disk 12 is loaded is positioned at a height of a top end 35a of a wedge-shaped member 35 as a stacked tray splitting unit of a rotating arm 30 by moving vertically the tray 20 by the tray elevating mechanism, and then the wedge-shaped member 35 is pushed into a boundary between the trays 20 by swinging the rotating arm 30. The wedge-shaped member 35 enters into a boundary between the trays 20 to separate the trays, and the rotating arm 30 enters into a boundary between the trays 20 while being lifted by a vertically moving mechanism 34 if necessary. Accordingly, since the rotating arm 30 can be positioned under a desired tray 20 only by positioning the vertical position of the tray 20, the rotating arm 30 can be easily positioned vertically without interference of the tray 20.

## Description

### Technical Field

The present invention relates to a multiple-disk changer type optical disk device for selecting a desired optical disk from a plurality of optical disks that are loaded on a plurality of trays and recording/playing the optical disk.

### Background Art

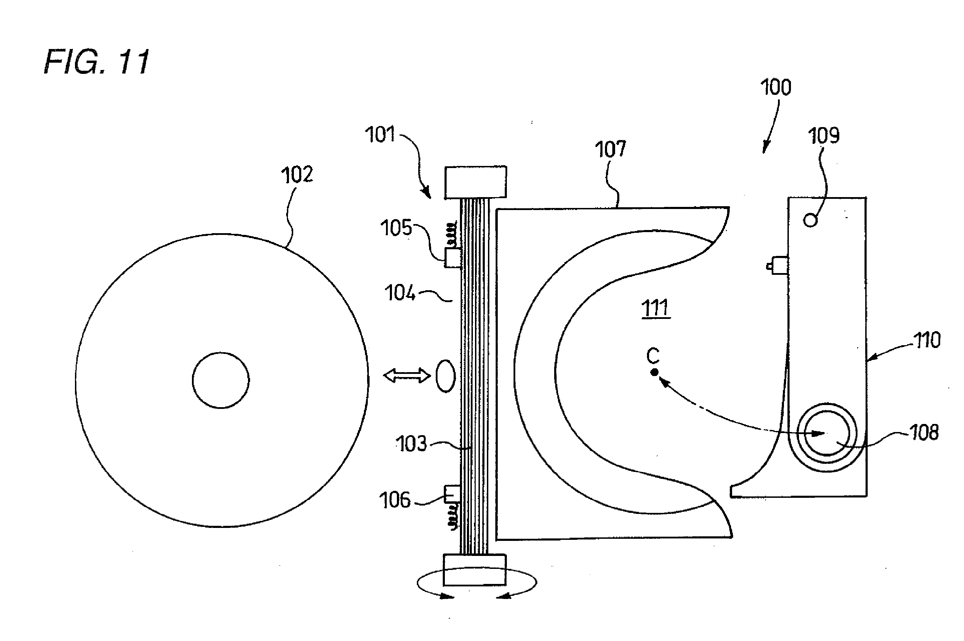

In the prior art, the multiple-disk changer type optical disk devices in which plural sheets of optical disks are loaded in advance in a main body of the optical disk device and then a desired optical disk is selected and recorded/played have been developed (see Patent Literature 1, for example).
As shown in FIG.11, in an optical disk device 100, a slot 103 is provided on the front side of a main body 101. A large-diameter disk 102 with an outer diameter of 12 cm such as CD (Compact Disc), DVD (Digital Versatile Disc), or the like and media such as a dummy disk assembled by fitting a small-diameter CD with an outer diameter of 8 cm in an annular adapter with an outer diameter of 12 cm, and the like is inserted through the slot 103. A carrying roller 104 is provided rotatably on the inside of the slot 103 in the main body 101 to intersect orthogonally with the carrying direction. This carrying roller 104 carries the large- diameter disk 102, which is inserted through the slot 103 and decided as the playable disk by outer-diameter sensors 105, 106 into the inside of the main body.

A plurality of trays 107 are stacked vertically in the rear of the carrying roller 104 (the right side in FIG.11). A rotating arm 110 having a turntable 108 at its top end is provided in rear of the tray 107 to swing on a rotating shaft 109. This turntable 108 turns while holding the disk 102. A pickup (not shown) is provided to the rotating arm 110 to move reciprocally. After the rotating arm 110 is swung and positioned in a recording/ playing position, the recording/playing operation is applied to the disk 102 while moving the pickup reciprocally.
Patent Literature 1: JP-A-2003-338112 (Fig.4)

### Disclosure of the Invention

### Problems that the Invention is to Solve

By the way, upon playing or recording a desired optical disk 102, a group of trays 107 is moved vertically up to a predetermined height position and a workspace is provided over the tray 107 on which the desired optical disk 102 is loaded. Then, the rotating arm 110 is positioned at a desired height position and then the rotating arm 110 is positioned in the workspace by swinging around the rotating shaft 109. Hence, positioning of the tray 107 in the height direction and positioning of the rotating arm 110 in the height direction must be taken respectively. As a result, such a problem existed that tolerances in both positioning operations are combined mutually to increase a positioning error and thus the rotating arm 110 and the tray 107 are likely to interfere with each other.

The present invention has been made to solve the problems in the prior art, and it is an object of the present invention to provide an optical disk device capable of positioning easily a rotating arm with respect to a tray.

### Means for Solving the Problems

An optical disk device of the present invention equipped with a main body for loading a plurality of optical disks in an inside, a plurality of stacked trays for holding optical disks respectively in the inside of the main body individually, and a rotating arm that has a turntable for holding and turning the optical disk at a top end, supports movably an optical head portion for recording/playing the optical disk, and is swung on a pivot that is in parallel with a stacked direction of respective trays, includes a tray elevating mechanism for moving a plurality of stacked trays vertically; a vertically moving mechanism for supporting the rotating arm vertically movably; and a stacked tray splitting unit provided to a front end of the rotating arm in a swinging direction to split both trays at a predetermined interval when the stacked tray splitting unit is pushed into a boundary between adjacent trays.

According to this configuration, a tray in which a desired optical disk is loaded is positioned at a height of the top end of the wedge-shaped member of the rotating arm by moving vertically the tray by the tray elevating mechanism, and then the stacked tray splitting unit is pushed into a boundary between the trays by swinging the rotating arm. The stacked tray splitting unit enters into a boundary between the trays to separate the trays at a predetermined interval corresponding to a height of the stacked tray splitting unit and position the rotating arm in the recording/playing position. At this time, the rotating arm enters into a boundary between the trays while being lifted by a vertically moving mechanism if necessary. Therefore, since the rotating arm can be positioned under a desired tray only by positioning the vertical position of the tray, the rotating arm can be easily positioned vertically without interference of the tray.

Also, in the optical disk device according to the present invention, the stacked tray splitting unit goes up onto an upper face of a lower tray when the stacked tray splitting unit is pushed into a boundary between adjacent trays.

According to this configuration, the stacked tray splitting unit can go up onto the upper surface of the lower tray when such unit is pushed under the predetermined tray. Accordingly, since the rotating arm can be lifted to the desired tray to enter only by positioning the vertical position of the tray at the height of the top end of the stacked tray splitting unit, the rotating arm can be easily positioned vertically without interference of the tray.

Also, in the optical disk device according to the present invention, a holding portion is provided to each of the stacked trays to hold the optical disk from a label face side of the optical disk.

According to this configuration, the tray holding portion holds the optical disk from a label face side of the optical disk. Therefore, the optical disk can be set easily on the turntable of the rotating arm that enters into a boundary between the trays.

Also, in the optical disk device according to the present invention, the tray elevating mechanism moves vertically the plurality of trays as a whole, and holds the trays positioned higher than a top end of the stacked tray splitting unit being entered to move upward and holds the trays positioned lower than the top end to move downward.

According to this configuration, the tray elevating mechanism positions the tray that holds a desired optical disk therein at a height of the top end of the stacked tray splitting unit of the rotating arm by moving the trays vertically. Then, when the rotating arm is swung, the stacked tray splitting unit enters to spread the trays and is swung to the recording/playing position because the trays positioned higher than the top end of the stacked tray splitting unit can move upward and the trays positioned lower than the top end of the stacked tray splitting unit can move downward.

Also, in the optical disk device according to the present invention, the stacked tray splitting unit is provided out of a swinging operation range of the rotating arm and moved vertically to cooperate with a vertical movement of the rotating arm.

According to this configuration, the desired trays can be split not to enter the stacked tray splitting unit into a boundary between the trays, and a driving force of the rotating arm can be reduced.

### Advantages of the Invention

The present invention can provide the optical disk device that has the tray elevating mechanism for moving vertically a plurality of stacked trays and the vertically moving mechanism for supporting the rotating arm vertically movably, and is capable of positioning the rotating arm in the desired tray position not by positioning the rotating arm in the vertical direction but by positioning only the tray in the vertical direction because the wedge-shaped member for separating both trays when pushed into a boundary between the adjacent trays is provided to the front end of the rotating arm in the swinging direction

### Brief Description of the Drawings

[FIG.1] A general perspective view of a car audio equipment in which an optical disk device according to an embodiment of the present invention is built.
[FIG.2] A plan view showing a standby state of the optical disk device according to the embodiment of the present invention when viewed from a II-II position in FIG.1.
[FIG.3] (A) a plan view of a tray elevating mechanism, (B) a sectional view showing a height position relationship between a motor and a gear group when a tray group takes a descended position, and (C) a sectional view showing a height position relationship between a motor and a gear group when the tray group takes an ascended position.
[FIG.4] (A) a plan view of a cam gear to elevate the tray group, and (B) a side view of the cam gear.
[FIG.5] (A) a sectional view showing a starting step in recording/playing the first optical disk, (B) a sectional view showing an intermediate step in recording/playing the first optical disk, and (C) a sectional view showing an ending step in recording/playing the first optical disk.
[FIG.6] (A) a sectional view showing a starting step in recording/playing the sixth optical disk, (B) a sectional view showing an intermediate step in recording/playing the sixth optical disk, and (C) a sectional view showing an ending step in recording/playing the sixth optical disk.
[FIG.7] (A) a sectional view showing a starting step in recording/playing the third optical disk, (B) a sectional view showing an intermediate step in recording/playing the third optical disk, and (C) a sectional view showing an ending step in recording/playing the third optical disk.
[FIG.8] A perspective view showing a tray elevating mechanism that provides a workspace between desired trays.
[FIG.9] A perspective view of a stacked tray splitting mechanism.
[FIG.10] An enlarged view of pertinent portions of the stacked tray splitting mechanism.
[FiG.11] A plan view of an optical disk device in the prior art.

### Description of Reference Numerals and Signs

- 10: optical disk device
- 12: optical disk
- 12a: label face
- 13: main body
- 20: tray
- 21: holding portion
- 30: rotating arm
- 31: turntable
- 32: optical head portion
- 33: pivot
- 40: tray elevating mechanism
- 34: vertically moving mechanism
- 35: wedge-shaped member (stacked tray splitting member)
- 35a: top end
- 50: tray lifting mechanism
- 75, 85: tray lifting member (stacked tray splitting member)

### Best Mode for Carrying Out the Invention

### (Embodiment 1)

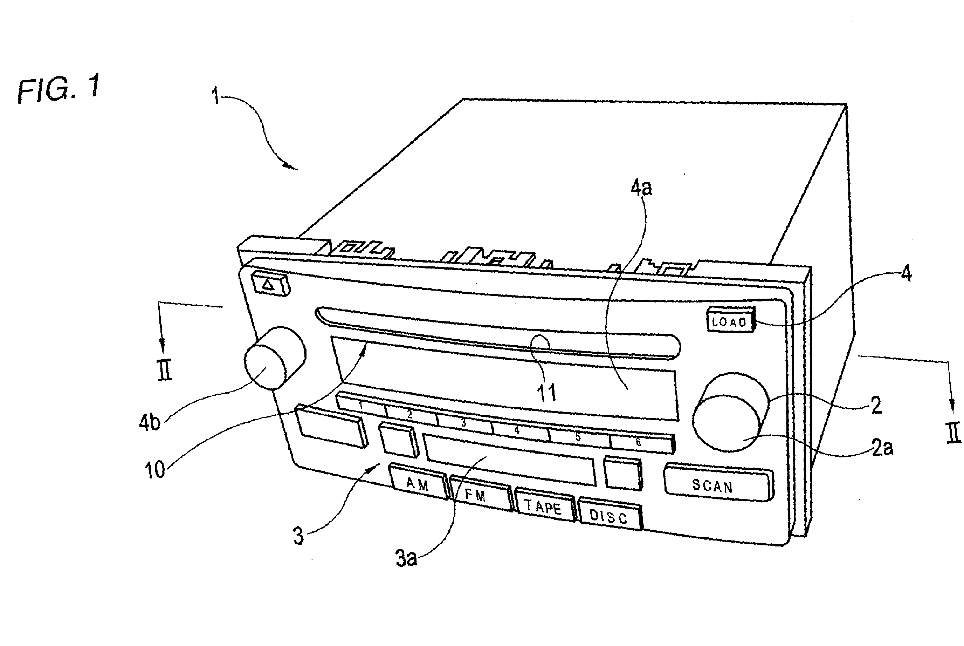

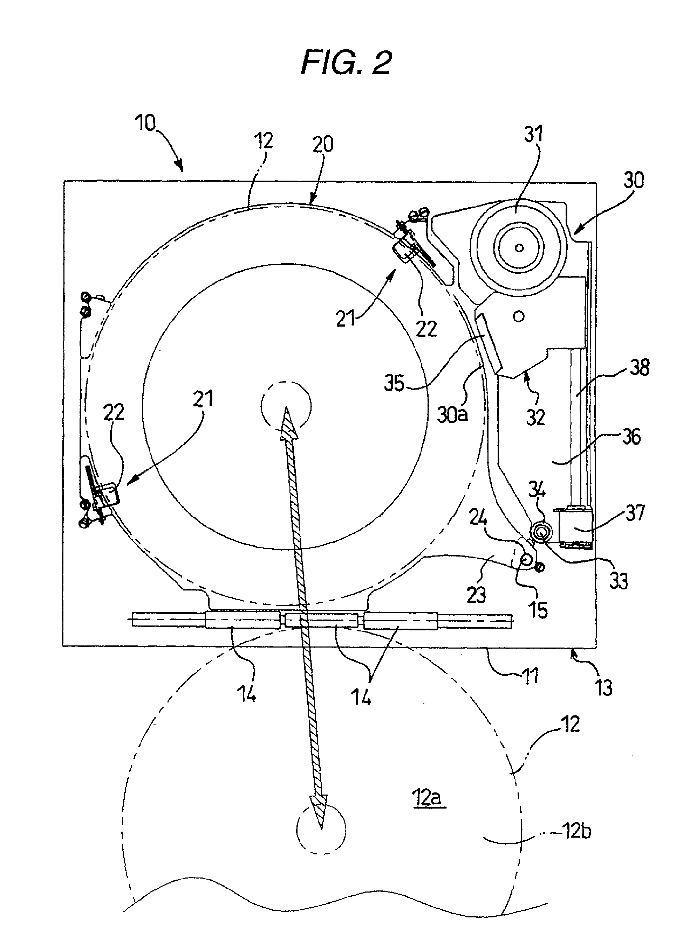

An optical disk device according to a first embodiment of the present invention will be explained with reference to the drawings hereinafter.
A general perspective view of a car audio equipment 1 in which an optical disk device 10 according to an embodiment of the present invention is built is shown in FIG.1. A radio 2, a cassette tape player 3, etc. as well as the optical disk device 10 are built in the car audio equipment 1. An optical disk slot 11 for the optical disk device 10, a radio tuning knob 2a, a cassette insertion slot 3a, and the like are provided to a front panel 4 in addition to a display portion 4a used commonly in all functions and a power/volume knob 4b. Also, a controlling portion (not shown) for controlling the radio 2, the cassette tape player 3, the optical disk device 10, etc. is provided on the inside.
Here, as shown in FIG.2, carrying rollers 14 being paired vertically are provided on the inside of the slot 11 of the main body 13. The carrying rollers 14 carry in the optical disk 12 inserted into the slot 11 and eject the optical disk 12 whose recording/playing operation is completed from the slot 11.

A plan view of the optical disk device 10 according to the embodiment of the present invention built in the car audio equipment 1 when viewed from a II-II position in FIG.1 is shown in FIG.2.
As shown in FIG.2, the optical disk device 10 includes the main body 13 for loading a plurality of optical disks 12 on its inside, a plurality of trays 20 stacked to hold the optical disks 12 on the inside of the main body 13 individually, and a rotating arm 30 having a turntable 31 being rotated while holding the optical disk 12 at its top end. Also, this rotating arm 30 supports movably an optical head portion 32 that makes the recording/ playing of the optical disk 12, and is swung on a pivot 33 that stands upright in parallel with the hierarchical direction of respective trays 20.

As shown in FIG.2, the optical head portion 32 having an optical head (not shown) is provided to a suspension chassis 36 of the rotating arm 30 to move reciprocally along the direction that connects the pivot 33 and a center of the turntable 31. The optical head portion 32 is moved by a lead screw 38 that is rotated by a drive motor 37.

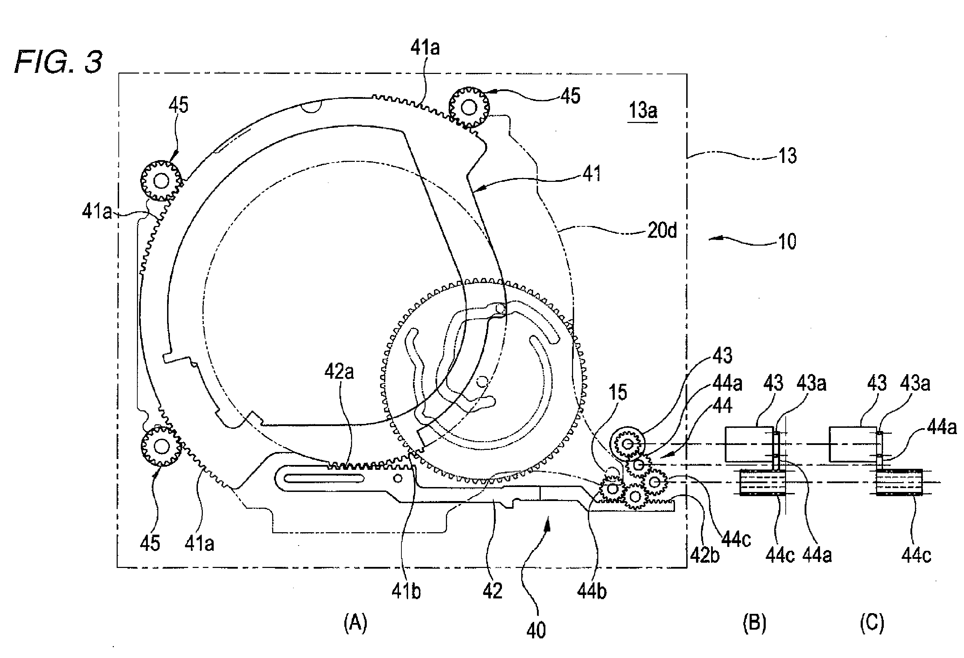

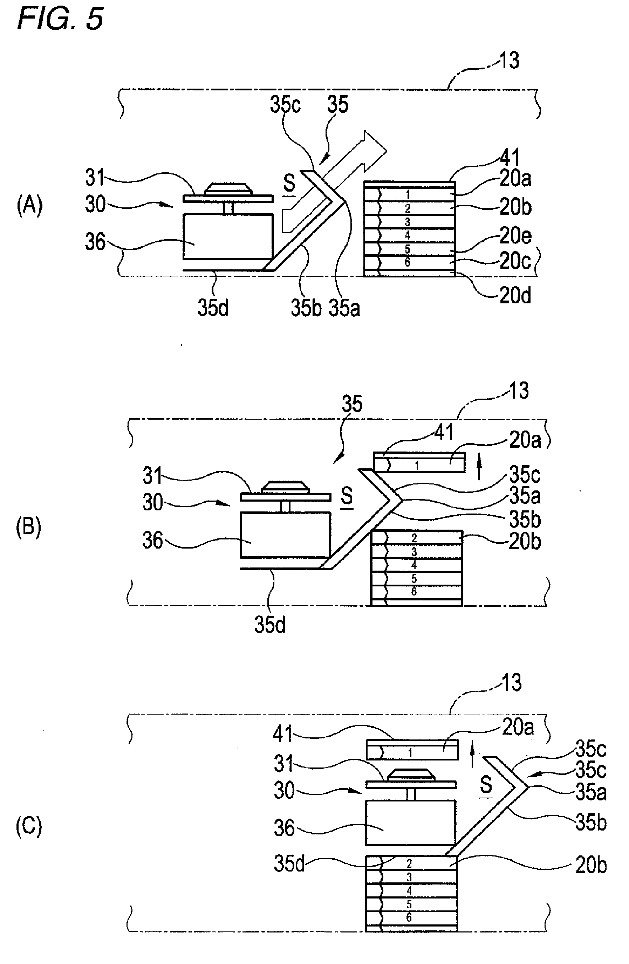

Also, a tray elevating mechanism 40 (see FIG.3) for moving up and down a plurality of stacked trays 20 and a vertically moving mechanism 34 for supporting the rotating arm 30 movably in the vertical direction are provided. Also, a wedge-shaped member 35 serving as a stacked tray splitting member, which is pushed in a boundary between neighboring trays 20 to separate both trays 20, is provided to a front end 30a of the rotating arm 30 in the swing direction.
As shown in FIG.5, the wedge-shaped member 35 has a size equal to a workspace S provided between the trays 20, and has a sharp-pointed top end 35a. A lower face 35b and an upper face 35c are provided with a slope respectively to spread backward. Also, a lower end portion of the lower face 35b is connected smoothly to a bottom plate 35d. Accordingly, the workspace S equivalent to a height of the wedge-shaped member 35 can be ensured. In this case, after the workspace S is ensured, the upper face 35c of the wedge-shaped member 35 is folded in the lower face 35b on the top end 35a as a hinge such that this wedge-shaped member 35 hinders a loading operation of the optical disk 12 on the turntable 31.

Also, a holding portion 21 for holding the optical disk 12 on the lower surface side of the tray 20 is provided at plural locations of an outer periphery of each tray 20. These holding portions 21 clamp an outer periphery of the optical disk 12 such that a label face 12a of the optical disk 12 is directed upward and a recording face 12b is directed downward. The holding portion 21 has a claw portion 22 that is turned. The claw portions 22 clamp the outer periphery of the optical disk 12 on the recording face 12b side in a state that the tray 20 holds the optical disk 12, while the claw portions 22 are opened downward at a time of recording/playing to drop the optical disk 12 onto the turntable 31. In this case, the optical disk 12 is prevented from dropping off completely from the claw portions 22 in a state that the claw portions 22 are opened.
A through hole 24 is provided to a top end of an arm portion 23 in each tray 20. Each tray 20 is supported to move vertically along a post 15 that stands upright on a bottom portion 13a of the main body 13.

As shown in FIG.3, the tray elevating mechanism 40 is constructed by a partial disk-like gear plate 41 provided over an uppermost tray 20a, a working rod 42 for rotating the gear plate 41, a motor (not shown) and a gear group 44 for moving reciprocally the working rod 42, and cam gears 45 that engages with gear portions 41 a that are formed on an outer peripheral surface of the gear plate 41 at plural locations. The gear plate 41 is a partial disk-like member having a large diameter portion whose outer diameter is almost equal in size to the tray 20 and a small diameter portion. The gear portions 41 a are formed on an outer peripheral surface of the large diameter portion at at least three locations to hold the gear plate 41 rotatably. Also, a gear portion 41 b is formed on an outer peripheral surface of the small diameter portion at one location. A gear portion 42a formed at a top end portion of the working rod 42 engages with the gear portion 41 b. Also, a gear portion 42b is formed on the base end portion of the working rod 42, and a last gear 44b of the gear group 44 engages with the gear portion 42b. In this case, since the gear plate 41 is provided over the group of the trays 20, the working rod 42 and the gear group 44 are also provided over the group of the trays 20.

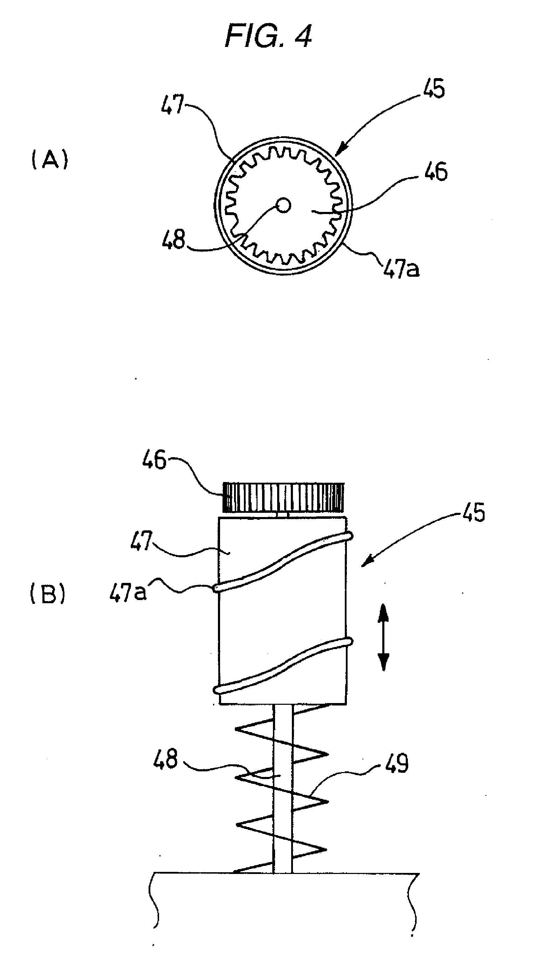

A gear 43a is fitted to a rotating shaft of a tray lifting member 43, and engages with a first gear 44a. The first gear 44a engages with a second gear 44c. As shown in FIGS.3(B),(C), the second gear 44c is a cylindrical gear that is formed thick in the vertical direction, and can be moved vertically with respect to the first gear 44a while engaging with the first gear 44a.
In contrast, as shown in FIG.4, the cam gear 45 has a gear portion 46 that engages with the gear portions 41 a of the gear plate 41, and a cam portion 47 on an outer peripheral surface of which a helical cam projection 47a is formed. The gear portion 46 and the cam portion 47 are rotated integrally on a shaft 48. The cam projection 45c supports an outer periphery of a receiving tray 20d, which supports the group of the trays 20, from the lower side and moves the receiving tray 20d vertically when the cam portion 45b is rotated. Also, the cam portion 45b is always energized upward by a spring 49. Thus, the cam portion 47 can go down when a falling force that is in excess of a predetermined magnitude is applied to the receiving tray 20d supported by the cam projection 47a and the group of the trays 20 stacked on the receiving tray 20d.

Therefore, in the tray elevating mechanism 40, when the tray lifting member 43 rotates the first gear 44a of the gear group 44, the last gear 44b causes the working rod 42 to move reciprocally via a series of gear group 44. The gear plate 41 is rotated by the reciprocal movement of the working rod 42 to rotate the cam gear 45. Thus, the receiving tray 20d supported by the cam projection 47a is moved vertically and the whole group of the trays 20 is moved vertically. In this case, when a downward external force that is in excess of a predetermined magnitude is applied to the group of the trays 20 or the receiving tray 20d, the cam portion 47 of the cam gear 45 go down against a spring force of the spring 49 and thus the gear plate 41, the receiving tray 20d, and the group of the trays 20 go down.

Next, the optical disk device 10 constructed as above will be explained with reference to FIG.5 to FIG.7 hereunder.
First, the case where the recording/playing is applied to the optical disk 12 loaded in the uppermost (first) tray 20a will be explained with reference to FIG.5 hereunder. Here, as shown in FIG.5(A), the wedge-shaped member 35 provided to the rotating arm 30 is constructed such that, when the rotating arm 30 and the trays 20 are located in the lowest position, i.e., on the bottom portion 13a of the main body 13, the top end 35a of the wedge-shaped member 35 is positioned at a boundary between the first tray 20a and a second tray 20b.

At first, the case where the recording/playing of the optical disk 12 loaded in the first tray 20a is made will be explained with reference to FIG.5 hereunder.
In this case, as shown in FIG.5(A), the wedge-shaped member 35 of the rotating arm 30 and the stacked trays 20 are located in the lowest position around the bottom portion 13a of the main body 13 and, as described above, the top end 35a of the wedge-shaped member 35 is positioned at a boundary between the first tray 20a and a second tray 20b. Therefore, as shown in FIG.5(B), the top end 35a of the wedge-shaped member 35 is pushed into a boundary between the first tray 20a and the second tray 20b by swinging the rotating arm 30 on the pivot 33 from this state. Since the second tray 20b and the underlying trays 20 cannot descend further, the lower face 35b of the wedge-shaped member 35 moves along the second tray 20b to lift the wedge-shaped member 35. Also, since a vertical width of the wedge-shaped member 35 is expanded backward from the top end 35a, the wedge-shaped member 35 lifts the first tray 20a to separate the first tray 20a from the second tray 20b. As shown in FIG.5(C), the first tray 20a after lifted is held by a brake, for example, or the like not to drop, and then the upper face 35c and the lower face 35b of the wedge-shaped member 35 are folded.
Accordingly, the rotating arm 30 can be positioned in the recording/playing position under the first tray 20a. Therefore, the optical disk 12 can be dropped onto the turntable 31 by releasing the claw portions 22 of the holding portions 21 of the first tray 20a to make the recording/playing.

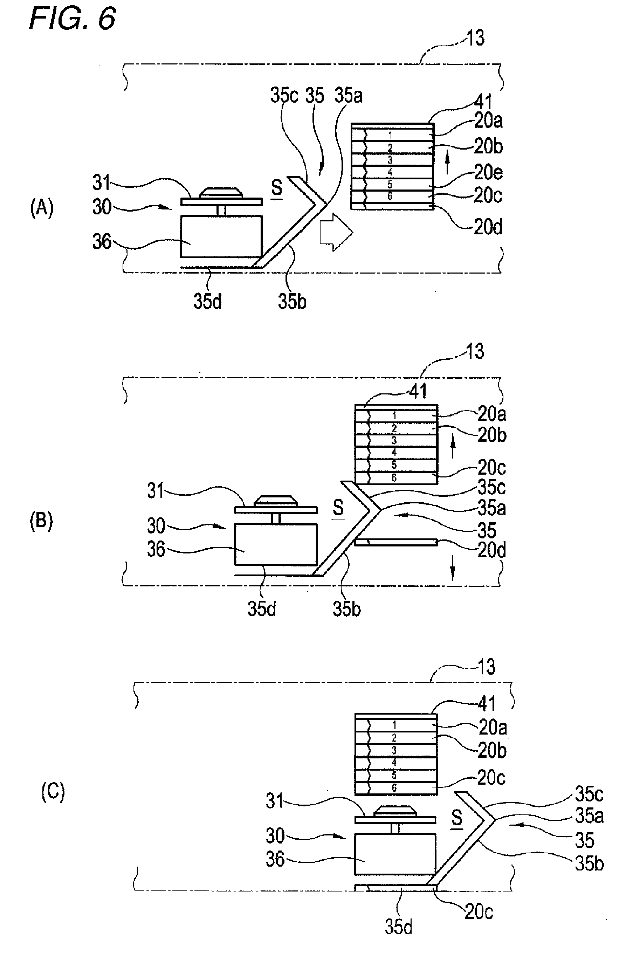

Next, the case where the recording/playing of the optical disk 12 loaded in a lowermost tray 20c is made will be explained with reference to FIG.6 hereunder.
In order to make the recording/playing of the optical disk 12 loaded in the lowermost tray 20c, the rotating arm 30 must be positioned under the lowermost tray 20c. Therefore, as shown in FIG.6(A), the trays 20 are lifted by the tray elevating mechanism 40 such that the top end 35a of the wedge-shaped member 35 of the rotating arm 30 is positioned under the lowermost tray 20c. Then, as shown in FIG.6(B), the wedge-shaped member 35 is pushed into the lower side of the lowermost tray 20c by swinging the rotating arm 30. At this time, since the receiving tray 30d provided under the lowermost tray 20c is arranged to move downward, the rotating arm 30 can swing smoothly without a vertical motion. In other words, the wedge-shaped member 35 of the rotating arm 30 pushes down the receiving tray 20d to the lowest position and simultaneously lifts the lowermost tray 20c and the overlying trays 20 to separate the sixth tray 20c from the receiving tray 20d. As shown in FIG.6(C), the sixth tray 20c after lifted is held by a brake, for example, or the like not to drop, and then the upper face 35c and the lower face 35b of the wedge-shaped member 35 are folded.
Accordingly, the rotating arm 30 can be positioned in the recording/playing position under the lowermost tray 20c to keep the workspace S. Therefore, the optical disk 12 can be dropped onto the turntable 31 by releasing the claw portions 22 of the holding portions 21 of the lowermost tray 20d to make the recording/playing.

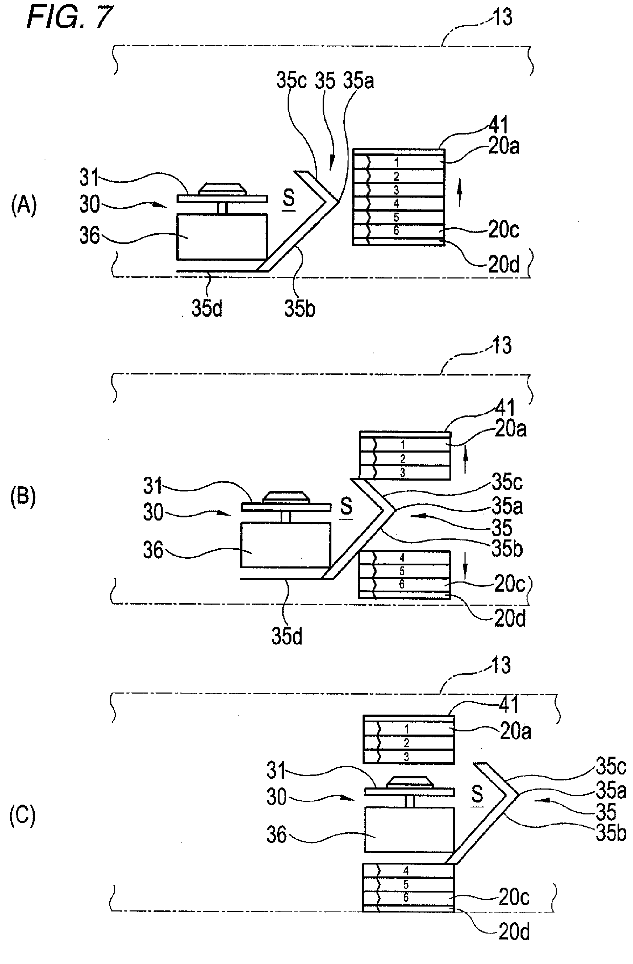

Next, the case where the recording/playing of the optical disk 12 loaded in any tray out of the second tray 20b to a fifth tray 20e on the lowermost tray 20c is made will be explained with reference to FIG.7 hereunder.
As shown in FIG.7(A), the trays 20 are lifted by the tray elevating mechanism 40 such that the top end 35a of the wedge- shaped member 35 of the rotating arm 30 is positioned under the tray 20 in which the desired optical disk 12 is loaded. As shown in FIG.7(B), the top end 35a of the wedge-shaped member 35 is pushed into a boundary between the trays 20 by swinging the rotating arm 30 in this state. Thus, the trays 20 underlying the desired tray 20 are pushed down by an action of the lower face 35b of the wedge-shaped member 35 until the receiving tray 20d reaches the bottom portion 13a of the main body 13. At the same time, the upper face 35c of the wedge-shaped member 35 lifts the trays 20 overlying the predetermined tray 20. When the receiving tray 20d comes into contact with the bottom portion 13a of the main body 13 to stop its falling action, the wedge-shaped member 35 goes up onto the tray 20 by an action of the lower face 35b of the wedge-shaped member 35 to separate both trays. Then, as shown in FIG.7(C), the trays 20 after lifted are held by a brake, for example, or the like not to drop, and then the upper face 35c and the lower face 35b of the wedge-shaped member 35 are folded.
Accordingly, the rotating arm 30 can be positioned in the recording/playing position under a desired tray 20 to keep the workspace S. Therefore, the optical disk 12 can be dropped onto the turntable 31 by releasing the claw portions 22 of the holding portions 21 of the desired tray 20 to make the recording/ playing.

According to the optical disk device 10 of the first embodiment of the present invention, the tray elevating mechanism 40 moves vertically the trays 20 such that the tray 20 in which the desired optical disk 12 is loaded is positioned at a height of the top end 35a of the wedge-shaped member 35 of the rotating arm 30, and then the wedge-shaped member 35 is pushed into a boundary between the trays 20 by swinging the rotating arm 30. As a result, the rotating arm 30 can be positioned automatically in the height direction by the wedge-shaped member 35, and thus there is no need to position the rotating arm 30 in the height direction. Also, an error is not generated in positioning the rotating arm 30, and thus only a tolerance in positioning the tray 20 may be considered and also a positioning precision can be improved.

In the above, an operation of the optical disk device 10 in which six sheets of trays 20 are stacked is explained. But the present invention can be applied similarly to the case where the trays 20 are stacked in any number.

### (Embodiment 2)

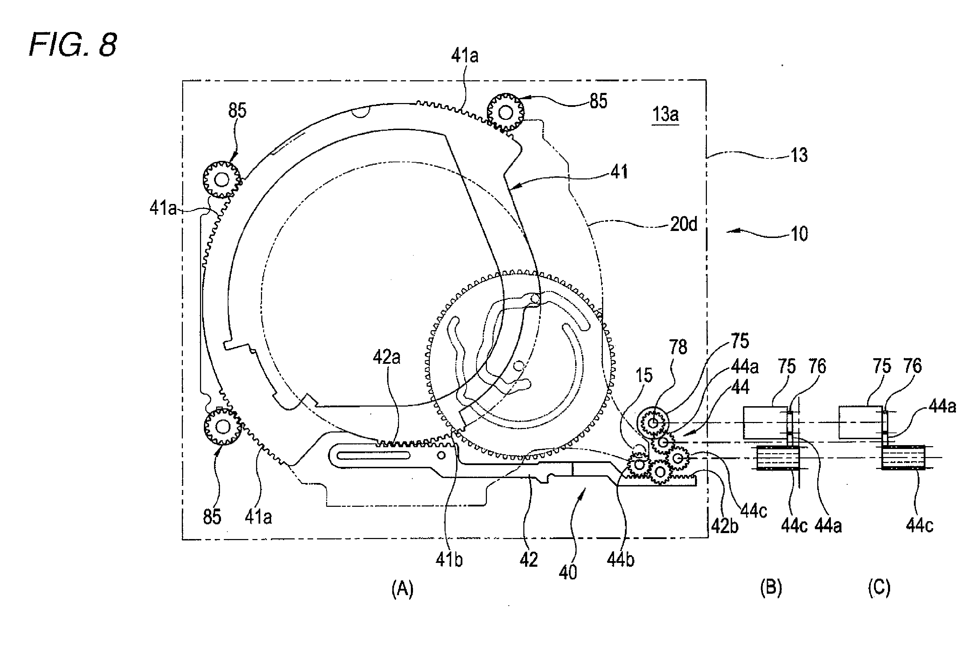

Next, a second embodiment of the present invention will be explained hereunder. FIG.8 is a view showing the tray elevating mechanism according to the second embodiment of the present invention. In FIG.8, the same reference symbols are affixed to the same constituent elements as those in FIG.3, and their redundant explanation will be omitted herein.

In FIG.8, a large difference from the embodiment 1 of the present invention is that, in place of the wedge-shaped member 35 as the stacked tray splitting member, a tray lifting member 75 is fitted into a rotating shaft 78 that is rotated by a driving force of a rotating/driving unit (not shown). Therefore, the tray lifting member 75 is rotated by the rotating/driving unit, and the trays 20 are split at a desired height by using a plurality of tray lifting members 85 that are operated together with the tray lifting member 75.

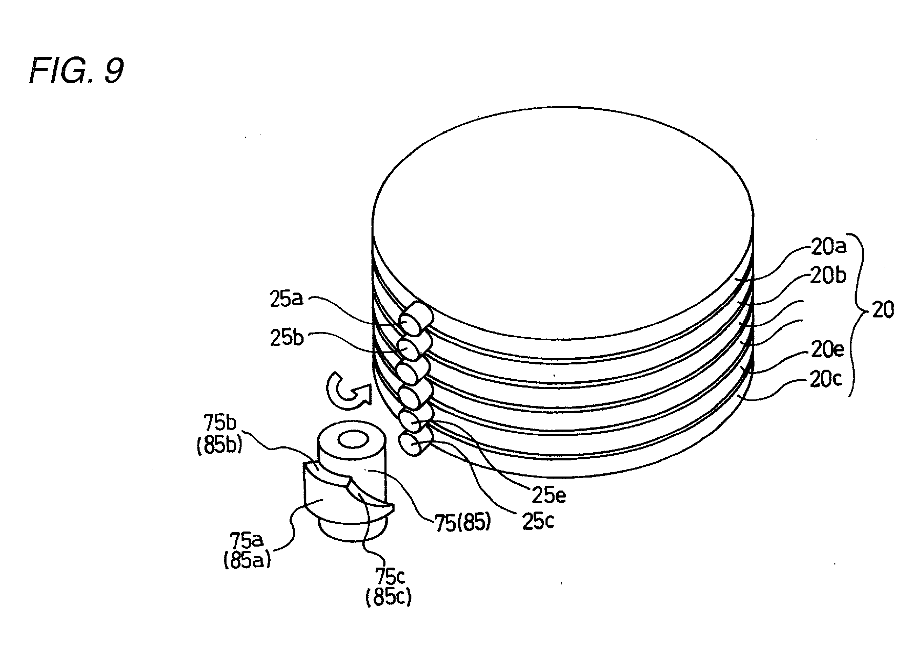

As shown in FIG.9, the tray lifting member 75 has a structure that enters into a space between two adjacent tray convex portions 25 provided to end portions of respective trays when rotated. A cam portion 75a is provided to an outer peripheral surface of the tray lifting member 75. The cam portion 75a has a gradient portion 75c and a loading portion 75b. The gradient portion 75c enters into a space between two adjacent tray convex portions 25 and then puts the tray convex portion 25 thereon to lift the tray 20 when rotated further. The loading portion 75b puts the tray convex portion 25 thereon to keep the tray 20 at a predetermined height after the tray 20 is lifted up to a predetermined height when rotated further.

The tray lifting member 85 provided in plural around the tray 20 has the similar shape as the above tray lifting member 75. These tray lifting members 75 and plural tray lifting members 85 are held at the same height. Therefore, although the tray convex portion 25 is illustrated only at one location of the outer peripheral portion of the tray in FIG.9, such tray convex portions 25 are provided herein at four locations to correspond to the tray lifting members 75 and plural tray lifting members 85. In addition, the tray lifting members 75 and the tray lifting members 85 are moved in the height direction to cooperate with the rotating arm 30, but are not cooperated with the swinging operation of the rotating arm 30.
In FIG.9, for easy understanding, the tray convex portions 25 and the tray lifting members 75 are depicted in positions that are slightly distant from their actual positions.

As shown in FIG.8, a gear member 76 fitted into the rotating shaft 78 on the tray lifting member 75 fitted into the same rotating shaft 78 engages with the first gear 44a. The first gear 44a engages with the second gear 44c. As shown in FIGS.8(B),(C), the second gear 44c is a cylindrical gear that is formed thick in the vertical direction, and can be moved with respect to the first gear 44a while engaging with the first gear 44a.

Also, the tray lifting member 85 and a gear member 86, which have the same shape as the tray lifting member 75 and the gear member 76 respectively, and the tray convex portion 25 (see FIG.9) are provided at plural locations (three locations in the present embodiment) around the tray. Like the embodiment 1, the tray lifting member 85, the gear members 86, and the tray convex portions 25 are operated together by using the partial disk-like gear plate 41 provided over the uppermost tray 20a, the working rod 42 for rotating the gear plate 41, the motor (not shown) and the gear group 44 for moving reciprocally the working rod 42, and the cam gears 45 that engages with the gear portions 41 a that are formed on the outer peripheral surface of the gear plate 41 at plural locations.

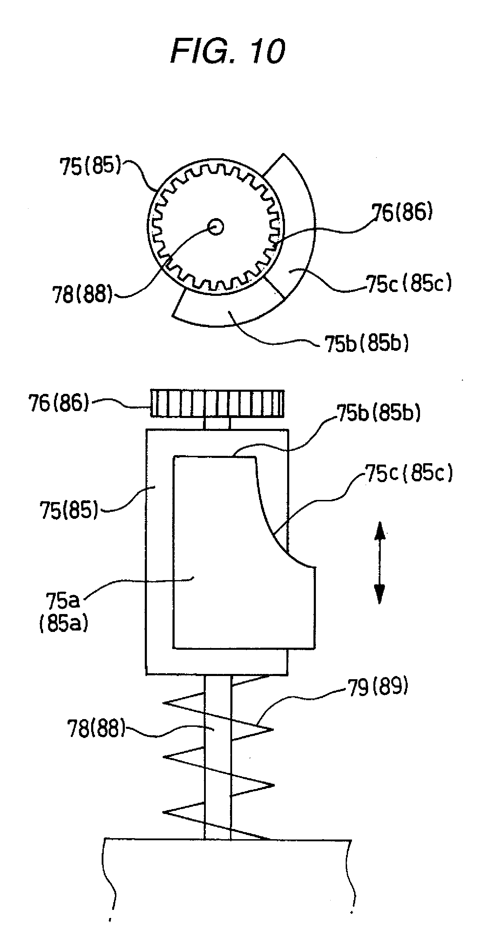

Also, as shown in FIG.10, the tray lifting member 75 (85) is always energized upward by a spring 79 (89). Thus, the tray lifting member 75 (85) can go down when a falling force that is in excess of a predetermined magnitude is applied to the convex portions 25d of the receiving tray 20d (see FIG.8) supported by the tray lifting member 75 (85) and the group of the overlying trays 20.

An operation of the optical disk device 10 constructed as above will be explained hereunder.
First, the case where the recording/playing is applied to the optical disk 12 loaded in the uppermost (first) tray 20a will be explained hereunder. Here, the tray lifting member 75 provided to the rotating arm 30 is constructed such that, when the rotating arm 30 and the trays 20 are located in the lowest position, i.e., on the bottom portion 13a of the main body 13, a lower end of the gradient portion 75c is positioned at a boundary between the first tray 20a and the second tray 20b.

At first, the case where the recording/playing of the optical disk 12 loaded in the first tray 20a is made will be explained hereunder.
In this case, the lower end of the gradient portion 75c of the tray lifting member 75 and the stacked trays 20 are located in the lowest position around the bottom portion 13a of the main body 13, and the lower end of the gradient portion 75c is positioned at a boundary between a convex portion 25a of the first tray 20a and a convex portion 25b of the second tray 20b. Therefore, the lower end of the gradient portion 75c of the tray lifting member 75 is pushed into a boundary between the first tray 20a and the second tray 20b by turning the rotating shaft of the tray lifting member 75 from this state. Since the second tray 20b and the underlying trays 20 cannot descend further, the lower face of the gradient portion 75c goes up onto the convex portion 25b of the second tray 20b to lift the tray lifting member 75 when the tray lifting member 75 is rotated further.

Also, since a vertical width of the tray lifting member 75 is expanded backward from the top end of the gradient portion 75c, the tray lifting member 75 lifts the convex portion 25a of the first tray 20a simultaneously to separate the first tray 20a from the second tray 20b. Also, this rotation operation is transferred to a plurality of tray lifting members 85 via the gear group 44, the working rod 42, and the gear plate 41. In other words, since a plurality of tray lifting members 85 make similarly the rotating operation in synchronism with the tray lifting member 75, the simultaneous tray splitting can be performed at plural locations so that the trays can be split while keeping a stable parallel condition.
Accordingly, the rotating arm 30 can be positioned in the recording/playing position under the first tray 20a. Therefore, the optical disk 12 can be dropped onto the turntable 31 by releasing the claw portions 22 of the holding portions 21 of the first tray 20a to make the recording/playing.

Next, the case where the recording/playing of the optical disk 12 loaded in the lowermost tray 20c is made will be explained hereunder.
In order to make the recording/playing of the optical disk 12 loaded in the lowermost tray 20c, the rotating arm 30 must be positioned under the lowermost tray 20c. First, the trays 20 are lifted by the elevating mechanism such that the lower end of the gradient portion 75c (85c) of the tray lifting member 75 (85) is positioned under the lowermost tray 20c. Then, the lower end of the gradient portion 75c (85c) of the tray lifting member 75 (85) is pushed into the lower side of the lowermost tray 20c by rotating the rotating shaft of the tray lifting member 75 (85). At this time, since the receiving tray 20d under the lowermost tray 20c is arranged to move downward, the rotating arm 30 is never moved vertically.

In other words, the lower end of the gradient portion 75c (85c) of the tray lifting member 75 (85) pushes down the receiving tray 30d to the lowest position and simultaneously lifts the lowermost tray 20c and the overlying trays 20 to separate the sixth tray 20c from the receiving tray 20d. A convex portions 25c of the lowermost tray 20c are loaded on the loading portions 75b (85b) of the tray lifting member 75 (85) not to drop the sixth tray 20c after lifted, and then the rotating arm 30 is swung.
Accordingly, the rotating arm 30 can be positioned in the recording/playing position under the lowermost tray 20c to keep the workspace S. Therefore, the optical disk 12 can be dropped onto the turntable 31 by releasing the claw portions 22 of the holding portions 21 of the lowermost tray 20d to make the recording/playing.

Next, the case where the recording/playing of the optical disk 12 loaded in any tray out of the second tray 20b to the fifth tray 20e on the lowermost tray 20c is made will be explained with reference to FIG.7 hereunder.
The trays 20 are lifted by the tray elevating mechanism 40 such that the lower end of the gradient portion 75c (85c) of the tray lifting member 75 (85) is positioned under the tray 20 in which the desired optical disk 12 is loaded. The lower end of the gradient portion 75c (85c) of the tray lifting member 75 (85) is pushed into a boundary between the trays 20 by rotating the rotating shaft of the tray lifting member 75 (85) in this state. Thus, the trays 20 underlying the desired tray 20 are pushed down by an action of the lower face of the cam portion 75a of the tray lifting member 75 until the receiving tray 20d reaches the bottom portion 13a of the main body 13. At the same time, the gradient portion 75c (85c) of the tray lifting member 75 (85) lifts the convex portions of the predetermined tray 20 so as to lift the trays 20 overlying the predetermined tray 20. When the receiving tray 20d comes into contact with the bottom portion 13a of the main body 13 to stop its falling action, the cam portion 75a of the tray lifting member 75 (85) goes up onto the convex portion 25 of the underlying tray 20 by an action of the lower face of the cam portion 75a of the tray lifting member 75 (85) to separate both trays. Then, the convex portion 25 provided to the tray 20 on the lifted side is loaded on the loading portion 75b of the tray lifting member 75 not to drop the trays 20 after lifted. Then, the rotating arm 30 is swung to enter into the split space between the trays.

Accordingly, the rotating arm 30 can be positioned in the recording/playing position under the desired tray 20 to keep the workspace S. Therefore, the optical disk 12 can be dropped onto the turntable 31 by releasing the claw portions 22 of the holding portions 21 of the desired tray 20 to make the recording/ playing.

According to such optical disk device 10 of the second embodiment of the present invention, the tray lifting members 75, 85 are provided to the position in which the swinging operation of the rotating arm 30 to record or play the disk is not disturbed, and also the tray lifting members 75, 85 are cooperated with the vertical movement of the rotating arm 30. Therefore, when the tray 20 in which the desired optical disk 12 is loaded is positioned at a height of the lower ends of the gradient portions 75c, 85c of the tray lifting members 75, 85 by moving the trays 20 vertically, the gradient portions 75c, 85c of the tray lifting members 75, 85 are pushed into a boundary between the trays 20 by rotating the tray lifting members 75, 85 such that the rotating arm 30 is automatically positioned in the height direction by the tray lifting members 75, 85. As a result, there is no need to position the rotating arm 30, a vertical movement of which is cooperated with the tray lifting members 75, 85, in the height direction. Also, an error is not generated in positioning the rotating arm 30, and thus only a tolerance in positioning the tray 20 may be considered and also a positioning precision can be improved.
In addition, the tray lifting members 75, 85 have the loading portions 75b, 85b on which the convex portions 25 provided to the end portion of the tray 20 are loaded. Therefore, the rotating arm 30 can be swung while maintaining surely the split space between the trays.

This application is based upon Japanese Patent Application (Patent Application No.2004-329099) filed on November 12, 2004; the contents of which are incorporated herein by reference.

### Industrial Applicability

As described above, the optical disk device according to the present invention possesses such an advantage that the optical disk device having the tray elevating mechanism for moving vertically a plurality of stacked trays and the vertically moving mechanism for supporting the rotating arm vertically movably, and capable of positioning the rotating arm in the desired tray position not by positioning the rotating arm in the vertical direction but by positioning only the tray in the vertical direction because the wedge-shaped member for separating both trays when pushed into a boundary between the adjacent trays is provided to the front end of the rotating arm in the swinging direction can be provided, and is useful to the multiple-disk changer type optical disk device that selects a desired optical disk from a plurality of optical disks loaded on a plurality of trays and recording/playing the optical disk.

## Claims

1. An optical disk device, comprising:
a main body that loads a plurality of optical disks in an inside thereof;
a plurality of stacked trays that hold optical disks respectively in the inside of the main body; and
a rotating arm that includes a turntable for holding and turning the optical disk at a top end, supports movably an optical head portion for recording/playing the optical disk, and is swung on a pivot which is in parallel with a stacked direction of the stacked trays;
a tray elevating mechanism that moves a plurality of stacked trays vertically;
a vertically moving mechanism that supports the rotating arm vertically movably; and
a stacked tray splitting unit that is provided to a front end of the rotating arm in a swinging direction to split both trays at a predetermined interval when the stacked tray splitting unit is pushed into a boundary between adjacent trays.

2. The optical disk device according to claim 1, wherein the stacked tray splitting unit goes up onto an upper face of a lower tray when the stacked tray splitting unit is pushed into the boundary between adjacent trays.

3. The optical disk device according to claim 1 or claim 2, wherein a holding portion is provided to each of the stacked trays to hold the optical disk from a label face side of the optical disk.

4. The optical disk device according to any one of claim 1 to claim 3, wherein the tray elevating mechanism moves vertically the plurality of stacked trays as a whole, and holds the trays positioned higher than a top end of the stacked tray splitting unit being entered to move upward and holds the trays positioned lower than the top end of the stacked tray splitting unit to move downward.

5. The optical disk device according to any one of claim 1 to claim 4, wherein the stacked tray splitting unit is provided out of a swinging operation range of the rotating arm and moved vertically to cooperate with a vertical movement of the rotating arm.
